# EUROPÄISCHE PATENTSCHRIFT

(11) **EP 1 369 164 B1**
(45) Veröffentlichungstag und Bekanntmachung des Hinweises auf die Patenterteilung: **03.01.2007**
(21) Anmeldenummer: 03101420.2
(22) Anmeldetag: 20.05.2003
(51) Int. Cl.: B01D 53/94, B01D 53/86, F01N 3/08

(54) **Verfahren zum Betrieb einer Abgasreinigungsanlage auf der Basis eines katalytischen Absorptionssystems**
Process for operating an exhaust gas purifying system using a catalytic absorption system
Procédé d'opération d'un système de purification des gaz d'échappement en utilisant un système d'absorption catalytique

(30) Priorität: 04.06.2002 US 384831; 08.08.2002 CH 20021387
(43) Veröffentlichungstag der Anmeldung: 10.12.2003
(73) Patentinhaber: Alstom Technology Ltd, 5400 Baden (CH)
(72) Erfinder: Käfer, Gisbert Wolfgang, 5413 Birmenstorf (CH)

(56) Entgegenhaltungen:
- WO-A-01/51178
- DE-A- 10 049 040
- DE-A- 19 753 573
- US-A- 6 145 303

## Beschreibung

### TECHNISCHES GEBIET

Die vorliegende Erfindung bezieht sich auf das Gebiet der Abgasreinigungstechnik. Sie betrifft ein Verfahren zum Betrieb einer Abgasreinigungsanlage.

### STAND DER TECHNIK

Seit Mitte der 90er Jahre sind Verfahren zur Entfernung von Stickoxiden (NOx) und Kohlenmonoxid (CO) aus den Abgasen von Dieselmotoren, Gasturbinen etc. entwickelt worden, die ohne den Einsatz von Ammoniak auskommen und unter den Markennamen SCONOx und SCOSOx bekannt geworden sind.

Bei diesen Abgasreinigungsverfahren werden mittels spezieller Katalysatoren, die mit Platin und Kaliumkarbonat (SCONOx) bzw. mit Platin und einer SO₃ absorbierenden Schicht (SCOSOx) beschichtet sind, zunächst bestimmte Gasanteile oxidiert und dann absorbiert. Beim SCONOx-Prozess werden CO zu CO₂ und NO zu NO₂ oxidiert und dann das NO₂ mit dem Kaliumkarbonat (K₂CO₃) in Kaliumnitrit (KNO₂) und Kaliumnitrat (KNO₃) umgewandelt. Beim SCOSOx-Prozess wird SO₂ zu SO₃ oxidiert und das SO₃ absorbiert. Der Schwefel entziehende SCOSOx-Prozess ist dem SCONOx-Prozess vorgeschaltet, weil dieser durch Schwefelanteile im Abgas schnell unwirksam werden würde (siehe dazu z.B. die US-A-5,953,911).

Bei beiden Prozessen müssen in regelmässigen Abständen Regenerationszyklen zwischengeschaltet werden, in denen die Katalysatoren aus dem Abgasreinigungsprozess herausgenommen und mit Hilfe eines speziellen Regenerationsgases wieder regeneriert werden. Beim SCONOx-Katalysator werden das gebildete Kaliumnitrit und Kaliumnitrat in Anwesenheit von Wasserstoff und Kohlendioxid aus dem Regenerationsgas in das ursprüngliche Kaliumkarbonat, Wasser und reinen Stickstoff umgewandelt. Beim SCOSOx-Katalysator wird in Anwesenheit von Wasserstoff das SO₃ in SO₂ und Wasser umgewandelt und aus der absorbierenden Schicht entfernt. Eine detaillierte Beschreibung der Verfahren findet sich beispielsweise in dem Artikel von L. Czarnecki et al., SCONOx - Ammonia Free NOx Removal Technology For Gas Turbines, Proc. 2000 Int. Joint Power Generation Conf., Miami Beach, Florida, July 23-26, 2000.

Ein typisches SCONOx-System für die Gasturbine eines Kombikraftwerkes oder dgl. hat zehn bis fünfzehn einzeln abtrennbare Katalysatorabteilungen, von denen sich zu jeder Zeit 80% im Oxidations/Absorptions-Zyklus und 20% im Regenerationszyklus befinden. Ein Regenerationszyklus dauert dabei typischerweise 3 bis 8 Minuten, so dass sich jede Katalysatorabteilung für 12 bis 32 Minuten im Oxidations/Absorptions-Zyklus befindet.

Bislang werden während jeder Regenerationsphase sowohl der SCOSOx- als auch der SCONOx-Katalysator regeneriert. Da in der SCOSOx-Regeneration zuerst das Katalysatormaterial reduziert, d.h., von adsorbiertem Sauerstoff befreit werden muss, bevor die Freisetzung des absorbierten Schwefeldioxids beginnen kann, dauert die Regeneration des SCOSOx-Katalysators relativ lange. Typischerweise werden 70% der Regenerationszeit für SCOSOx aufgewendet. Um in den verbleibenden 30% der Regenerationszeit genügend Wasserstoff für die Regeneration des SCONOx-Katalysators zur Verfügung zu stellen, muss eine vergleichsweise hohe Konzentration an Wasserstoff im Regenerationsgas zur Verfügung gestellt werden. Dies wird durch eine möglichst hohe Betriebstemperatur des zur Herstellung von Wasserstoff aus Erdgas (Methan) verwendeten steam reformers erreicht. Allerdings ist eine hohe Betriebstemperatur des steam reformers mit beträchtlichen Betriebskosten verbunden.

### DARSTELLUNG DER ERFINDUNG

Es ist daher Aufgabe der Erfindung, ein Verfahren zum Betrieb eines SCO-NOx/SCOSOx-Systems anzugeben, welches sich durch einen reduzierten Bedarf an Wasserstoff auszeichnet, die Leistungsfähigkeit der Reinigungsanlage insgesamt verbessert und die Gefahr der Deaktivierung des SCONOx-Katalysators durch unvollständige SCOSOx-Regeneration reduziert.

Die Aufgabe wird durch die Gesamtheit der Merkmale des Anspruchs 1 gelöst. Der Kern der Erfindung besteht darin, die Regenerationsperioden der beiden Katalysatorenarten unabhängig voneinander zu optimieren, indem die Regeneration des für die Schwefeldioxidreduktion zuständigen Katalysators sehr viel seltener durchgeführt wird als die des für die Reduktion von NO und CO zuständigen Katalysators. Durch diese neuartige Betriebsweise werden folgende Vorteile realisiert:
a. der Wasserstoffbedarf für die Regeneration wird reduziert;
b. die Gefahr der Deaktivierung des SCONOx-Katalysators durch unvollständige SCOSOx-Regeneration wird reduziert; und
c. die Leistungsfähigkeit der Anlage wird erhöht.

Bevorzugt wird der Zeitabstand zwischen zwei Regenerationszyklen des zweiten Katalysators in Abhängigkeit vom SO₂-Gehaltes des zu reinigenden Abgases gewählt, wobei der Zeitabstand zwischen zwei Regenerationszyklen des zweiten Katalysators insbesondere zwischen 6 und 24 Stunden beträgt.

### WEGE ZUR AUSFÜHRUNG DER ERFINDUNG

Es wird vorgeschlagen, auf die Regenerierung des für die Reduktion von Schwefeldioxid zuständigen SCOSOx-Katalysators während eines Grossteils der Betriebszeit der Anlage zu verzichten und die gesamte Regenerationszeit eines Regenerationszyklus jeweils für die Regeneration des für die Reduktion von CO und NO zuständigen SCONOx-Katalysators zu verwenden. Abhängig vom SO₂-Gehalts des Abgases wird eine Regeneration des SCOSOx-Katalysators nur einmal alle 2 bis 24 Stunden durchgeführt.

Dies ist möglich da die Speicherkapazität des SCOSOx-Katalysators ausreichend ist, um das im Abgas einer mit Erdgas gefeuerten Gasturbine für mehr als 48 Stunden zu absorbieren, bevor eine Regeneration notwendig ist.

Der erfindungsgemässe Betrieb mit reduzierter Häufigkeit der SCOSOx-Regeneration bietet folgende Vorteile:
a. es kann eine geringere Wasserstoffkonzentration im Regenerationsgas akzeptiert werden, da die gesamte Regenerationszeit für die Regeneration des SCONOx-Katalysators genutzt werden kann und somit mehr Zeit vorhanden ist, um die zur Regeneration benötigte Wasserstoffmenge zur Verfügung zu stellen.
b. Durch die relativ langsam ablaufende SCOSOx-Regeneration ist die Freisetzung von SO₂ bei Beendigung der SCOSOx-Regeneration normalerweise noch nicht abgeschlossen. Das sich dadurch noch in der Katalysatorkammer befindende SO₂ kann zur Desaktivierung des SCONOx-Katalysators beitragen und so die Katalysatorwirkung beeinträchtigen. Durch die weniger häufige Regeneration des SCOSOx-Katalysators wird die Gefahr einer Desaktivierung des SCONOx-Katalysators drastisch verringert.

Das vorgeschlagene Verfahren kann angewendet werden in allen SCONOx-Anlagen, d.h., es kann nicht nur bei gasgefeuerten Anlagen, sondern auch bei Anlagen, die mit schwefelarmem Dieselöl betrieben werden, eingesetzt werden.

Die Anwendung des vorgeschlagenen Verfahrens verlangt keine Änderung am Anlagendesign. Selbst die Kontrollsoftware muss nicht verändert werden, da eine spezielle SCOSOx-Regeneration in vorgegebenen Intervallen bereits vorgesehen ist.

## Patentansprüche

1. Verfahren zum Betrieb einer Abgasreinigungsanlage, bei welcher nach dem SCONOx-Prinzip mit einem ersten Katalysator CO und NO gleichzeitig oxidiert werden und das entstehende NO₂ auf der Katalysatoroberfläche absorbiert wird, bei welcher weiterhin nach dem SCOSOx-Prinzip mit einem dem ersten Katalysator vorgeschalteten zweiten Katalysator SO₂ oxidiert und das entstehende SO₃ auf der Katalysatoroberfläche absorbiert wird, und bei welcher der erste und zweite Katalysator in regelmässigen Zeitabständen mittels eines Wasserstoff enthaltenden Regenerationsgases in einem Regenerationszyklus regeneriert werden, **dadurch gekennzeichnet, dass** die Regeneration des ersten und zweiten Katalysators in unterschiedlich langen Zeitabständen durchgeführt wird, und dass der Zeitabstand zwischen zwei Regenerationszyklen des zweiten Katalysators wesentlich länger ist als der Zeitabstand zwischen zwei Regenerationszyklen des ersten Katalysators.

2. Verfahren nach Anspruch 1, **dadurch gekennzeichnet, dass** der Zeitabstand zwischen zwei Regenerationszyklen des zweiten Katalysators in Abhängigkeit vom SO₂-Gehaltes des zu reinigenden Abgases gewählt wird.

3. Verfahren nach einem der Ansprüche 1 oder 2, **dadurch gekennzeichnet, dass** der Zeitabstand zwischen zwei Regenerationszyklen des zweiten Katalysators zwischen 2 und 24 Stunden beträgt.

## Claims

1. Method for operating an exhaust-gas purification system, in which CO and NO are simultaneously oxidized in accordance with the SCONOx principle by means of a first catalyst, and the NO₂ formed is absorbed on the surface of the catalyst, in which furthermore SO₂ is oxidized in accordance with the SCOSOx principle by means of a second catalyst arranged upstream of the first catalyst, and the SO₃ formed is absorbed on the surface of the catalyst, and in which the first and the second catalyst are regenerated in a regeneration cycle at regular time intervals by means of a regeneration gas containing hydrogen, **characterized in that** the regeneration of the first and second catalyst is carried out at time intervals of different lengths, and **in that** the time interval between two regeneration cycles of the second catalyst is significantly longer than the time interval between two regeneration cycles of the first catalyst.

2. Method according to claim 1, **characterized in that** the time interval between two regeneration cycles of the second catalyst is selected as a function of the SO₂ content of the exhaust gas to be purified.

3. Method according to either of claims 1 and 2, **characterized in that** the time interval between two regeneration cycles of the second catalyst is between 2 and 24 hours.

## Revendications

1. Procédé pour faire fonctionner un système de purification des gaz d'échappement, dans lequel, selon le principe SCONOx, on oxyde simultanément du CO et du NO avec un premier catalyseur, et le NO₂ formé est absorbé à la surface du catalyseur, dans lequel ensuite, selon le principe SCOSOₓ, on oxyde le SO₂ avec un deuxième catalyseur monté avant le premier catalyseur, et le SO₃ formé est absorbé à la surface du catalyseur, et dans lequel le premier et le deuxième catalyseur sont régénérés à intervalles de temps réguliers au moyen d'un gaz de régénération contenant de l'hydrogène dans un cycle de régénération, **caractérisé en ce que** la régénération du premier et du deuxième catalyseur est effectuée à intervalles de temps de longueur différente, et **en ce que** l'intervalle de temps entre deux cycles de régénération du deuxième catalyseur est considérablement plus long que l'intervalle de temps entre deux cycles de régénération du premier catalyseur.

2. Procédé selon la revendication 1, **caractérisé en ce que** l'intervalle de temps entre deux cycles de régénération du deuxième catalyseur est choisi en fonction de la teneur en SO₂ du gaz d'échappement à purifier.

3. Procédé selon l'une quelconque des revendications 1 ou 2, **caractérisé en ce que** l'intervalle de temps entre deux cycles de régénération du deuxième catalyseur est compris entre 2 et 24 heures.
